# EUROPÄISCHE PATENTSCHRIFT

(11) **EP 0 336 385 B1**
(45) Veröffentlichungstag und Bekanntmachung des Hinweises auf die Patenterteilung: **31.03.1993**
(21) Anmeldenummer: 89105926.3
(22) Anmeldetag: 05.04.1989
(51) Int. Cl.: B65G 15/40

(54) **Rohrfördergurt**
Tubular conveyor belt
Courroie tubulaire de transport

(30) Priorität: 07.04.1988 DE 3811606; 21.04.1988 DE 3813412; 02.02.1989 DE 3903028
(43) Veröffentlichungstag der Anmeldung: 11.10.1989
(73) Patentinhaber: PHOENIX AKTIENGESELLSCHAFT, 21079 Hamburg (DE)
(72) Erfinder: Küsel, Bernd, D-2100 Hamburg 90 (DE)

(56) Entgegenhaltungen:
- DE-A- 2 745 090
- DE-A- 2 745 090
- DE-A- 3 606 129
- DE-A- 3 606 129
- DE-A- 3 612 765
- GB-A- 2 137 950
- GB-A- 2 152 000

## Beschreibung

Die Erfindung betrifft einen Fördergurt aus Gummi oder gummiähnlichem Kunststoff mit in Längsrichtung verlaufenden eingebetteten Zugträgern, die sich im wesentlichen über die gesamte Fördergurtbreite erstrecken und die im Bereich der Längsränder (A-Bereich) einen anderen Aufbau aufweisen als im Restgurtbereich (B-Bereich), wobei der Gurt durch Überlappung seiner Längsränder (A-Bereich) zu einem Rohrfördergurt schließbar ist, der sich ringsum an Tragrollen abstützt.

Bereits vor mehr als 30 Jahren stand mit dem Schlauchbandförderer (DE-C-943 817) ein neues Transportsystem zur Diskussion, dem allerdings zunächst nicht der Durchbruch einer breiten Anwendung gelang. Während der vergangenen 10 Jahre ist dieses geschlossene Fördersystem jedoch entscheidend weiterentwickelt worden. Innerhalb der Ein- und Auslaufstrecke ist der Fördergurt wie bei den konventionellen Gurtförderern gemuldet. Auf der Transport- und Rücklaufstrecke schließt sich jedoch der Gurt und bildet eine Röhre (Rohrfördergurt, Schlauchband, Rollgurt). Für dieses Transportsystem werden folgende Anlagenteile benötigt, nämlich ringförmig angeordnete Tragrollen (DE-C-31 45 899, DE-A-36 06 129), Korrekturrollen (DE-C-31 22 664) und Trumme (z.B. als Ober- und Untertrumm). Gegenüber den konventionellen Gurtförderern zeichnet sich das geschlossene Transportsystem durch folgende Vorteile aus: Es ist besonders kurvengängig; es hat eine besonders hohe Steigfähigkeit; es ist platzsparend und schützt das Fördergut sowie die Umwelt (z.B. bei staubigem Fördergut). Diese Vorteile dürfen jedoch nicht darüber hinwegtäuschen, daß im Rahmen der Entwicklung des Schlauchband- bzw. Rohrgurtförderers große technische Probleme zu lösen waren bzw. noch zu lösen sind. Der folgende Stand der Technik soll dies belegen.

Nach der DE-A-32 28 937, GB-A-2 152 000 und DE-A-35 06 947 weist der Fördergurt im Verschlußbereich Klemmleisten bzw. radial nach außen abstehende längsverlaufende Stege auf. Dieser Verschlußmechanismus hat jedoch den Nachteil, daß neben den Trag- und Korrekturrollen ein zusätzliches Rollensystem (Leitrollen, Druckrollen) erforderlich ist. Darüber hinaus sind die Klemmleisten bzw. Stege verschleißanfällig.

Aus der DE-C-29 44 448 ist ein Fördergurt bekannt, bei dem an den überlappenden Seiten des Gurtes selbstklebende Bänder angeordnet sind. Ein Klebeverschluß im Überlappungsbereich hat jedoch folgende Nachteile: Relativbewegungen im Überlappungsbereich sind nicht möglich. Zudem ist ein Klebverschluß mechanisch wenig belastbar, und seine Funktion wird durch Verschmutzung stark beeinträchtigt. Ferner neigt dieser Verschluß stärker zum Anfrieren und behindert damit auch das Aufklappen am Abwurfpunkt. Ähnliche Probleme treten auch bei Verwendung von Verschlußlippen (DE-A-28 00 454, EP-C-0 046 690) auf.

Nach der neueren Entwicklung erfolgt die Bildung des Rohrfördergurtes durch bloßes Überlappen der Längsränder des Gurtes. Dabei weist der Fördergurt nach der DE-A-36 06 129 nur in seinen einander überlappenden Randbereichen eingebettete, in Längsrichtung durchlaufende Festigkeitsträger (Zugträger) in der Form von Stahldrahtseilen auf. Der Mittelteil kann in Quer- oder Diagonalrichtung (DE-A-36 12 765) verlaufende Verstärkungseinlagen enthalten. Diese Entwicklungsrichtung zeigt jedoch eine Reihe von Problemen auf, die nun im folgenden ausführlicher beschrieben werden.
1) Die größte mechanische Beanspruchung erfährt ein Fördergurt an der Aufgabestelle des Gurtförderers. In diesem Bereich ist der Fördergurt im flachen bis leicht gemuldeten Zustand. Das Fördergut prallt vor allem auf den mittleren Bereich des Fördergurtes. Die Standzeit (Lebensdauer) des Fördergurtes hängt entscheidend von der Widerstandfähigkeit des Gurtmittelbereiches ab. Diagonal angeordnete Gewebestreifen, die nur aus einer oder zwei Einlagen bestehen und Zwischenräume, die nur mit Gummi ausgefüllt sind, bieten ungenügende Beaufschlagungstüchtigkeit.
2) Bei Gurtförderern kann es zu Überschüttungen (Überladungen) kommen. In diesem Fall nimmt der gemuldetete Fördergurt im Aufgabebereich mehr Material auf als im rohrförmigen Zustand wegen des dortigen geringeren Füllquerschnitts untergebracht werden kann. Dies kann bei einem schwachen Verstärkungsmaterial zu Auswölbungen führen. Der Fördergurt stößt zwangsläufig gegen die ihn umgebenden Tragrollen, was zu Beschädigungen des Fördergurtes oder der Förderanlage führen kann.
3) Die Gewebeeinlagen sind um den Stahlseilzugträger herumgeführt einvulkanisiert. Die Zugbeanspruchung - fast total über die im Randbereich befindlichen Seile - sowie die wiederholte Zwangsführung zur Rohrform (der Gurt hat das Bestreben aufzuklappen) an jeder Tragrolle in Laufrichtung, führt zu einer überdurchschnittlich hohen mechanischen Beanspruchung eines Gurt-Randbereichs. Sie wird durch Torsion bei Kurvenführung noch verstärkt, sofern keine andere Lösung, wie z.B. mit drehbaren Rollenstühlen, vorhanden ist.
4) Durch Begrenzung des Zugträgers auf die schmalen Gurt-Randbereiche sind hohe Gurt-Bruchkräfte (Zugfestigkeiten) nicht oder nur dann realisierbar, wenn andere Fördergurt-Parameter (z.B. dünnere Deckplatten) in Kauf genommen werden.

In der DE-A-27 45 090 wird ein Fördergurt mit einem Zugträger aus Gewebe, insbesondere ein 3-Lagen-Gurt (Fig. 1), beschrieben. Dabei weisen die Kettfäden des den Zugträger bildenden Gewebes im mittleren Bereich (B-Bereich) des Fördergurtes die Gesamtzugfestigkeit der Festigkeitsklasse des Fördergurtes auf, während die Kettfäden des Gewebes in den Randbereichen (A-Bereich) keine oder nur eine sehr geringe Zugfestigkeit aufweisen. Mit dieser Gewebespezifikation soll die Beschädigung der Kanten durch Anlaufen des Fördergurtes an Streben oder dgl. der Förderanlage so gering wie möglich gehalten werden.

Aufgabe der Erfindung ist es, einen Fördergurt zu schaffen, der sich bei einem einfachen Grundaufbau der Gurteinlagen durch hohe Zugfestigkeit und hohe Flexibilität auszeichnet und dessen Zwangsführung zur Rohrform durch bloßes überlappen (d.h. ohne zusätzliche Verbindungsmittel) und ihre Beibehaltung erleichtert wird. Darüber hinaus soll die Herstellung derartiger Gurte wirtschaftlicher sein. Gelöst wird diese Aufgabe durch eine der drei Zugträgervarianten (I, II, III) gemäß Anspruch 1, 2 oder 3.

Zweckmäßige Ausgestaltungen der Erfindung sind in den Unteransprüchen 4 bis 16 genannt.

Während nach der DE-A-36 06 129 und DE-A-36 12 765 die Zugträger des Gurtes nur an definierten Stellen (insbesondere im Randbereich) angeordnet sind, weist der erfindungsgemäße Rohrfördergurt Zugträger auf, die sich im wesentlichen über die gesamte Fördergurtbreite erstrecken. Da jedoch die Zugträgerverhältnisse im Überlappungsbereich (A-Bereich) anders sind als im Restgurtbereich (B-Bereich), liegt der Schwerpunkt der Zugkraftwirkung entweder im A- oder B-Bereich. Soll die Zugkraft schwerpunktmäßig über die Zugträger im A-Bereich übernommen werden, kann beispielsweise der Gurtaufbau in diesem Bereich nach Variante I durch größere Seildurchmesser und/oder kleineren Seil-Abstand oder nach Variante II durch eine größere Einlagenzahl sich vom B-Bereich unterscheiden. Durch umgekehrte Maßnahmen erreicht man eine Zugkraftverlagerung in den B-Bereich hinein. Eine geringere Quersteifigkeit im A-Bereich hat eine leichtere Zwangsführung in den rohrförmigen Zustand zur Folge. Je nach Anlagenverhältnissen (z.B. Gurtbreite, Gurtlänge, Durchmesser des Rohrfördergurtes, Steig- und Kurvenverhältnisse, Tragrollenanordnung) wird man die entsprechenden Maßnahmen hinsichtlich des Gurt- bzw. Einlagenaufbaus ergreifen.

Die Erfindung wird nun anhand von Ausführungsbeispielen unter Bezugnahme auf schematische Zeichnungen erläutert. Es zeigen:
- Fig. 1 bis 9: Rohrfördergurte mit 7-litzigen Stahlseilen (Kurzform: St-Seile) nach Variante I, u.z. in verschiedenen Ausführungsformen;
- Fig. 10: einen Rohrfördergurt mit Aramid-Seilen (Kurzform: D-Seile) nach Variante I;
- Fig. 11 bis 14: Rohrfördergurte mit textilen Verstärkungseinlagen (Gewebeeinlagen) gemäß Variante II, u.z. in verschiedenen Ausführungsformen;
- Fig. 15: einen Rohrfördergurt mit Zugträgern gemäß Variante III;
- Fig. 16: einen Rohrfördergurt mit profilierter Innenoberfläche.

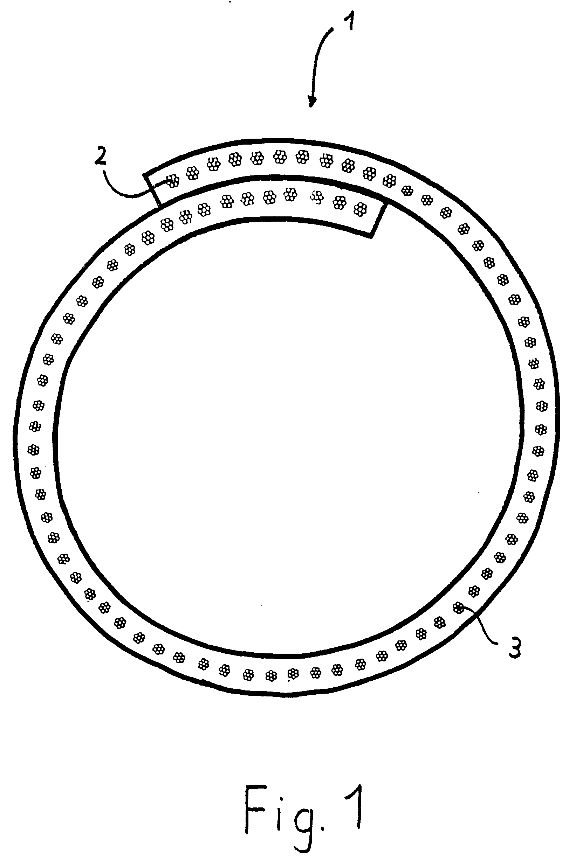

Nach Fig. 1 weist der Rohrfördergurt (1) St-Seile (2, 3) auf, die über die gesamte Gurtbreite hinweg in etwa den gleichen Abstand zueinander haben. Da der Durchmesser der St-Seile (2) innerhalb des A-Bereiches größer ist als der der St-Seile (3) im B-Bereich, liegt hier der Schwerpunkt der Zugkraft im Überlappungsbereich.

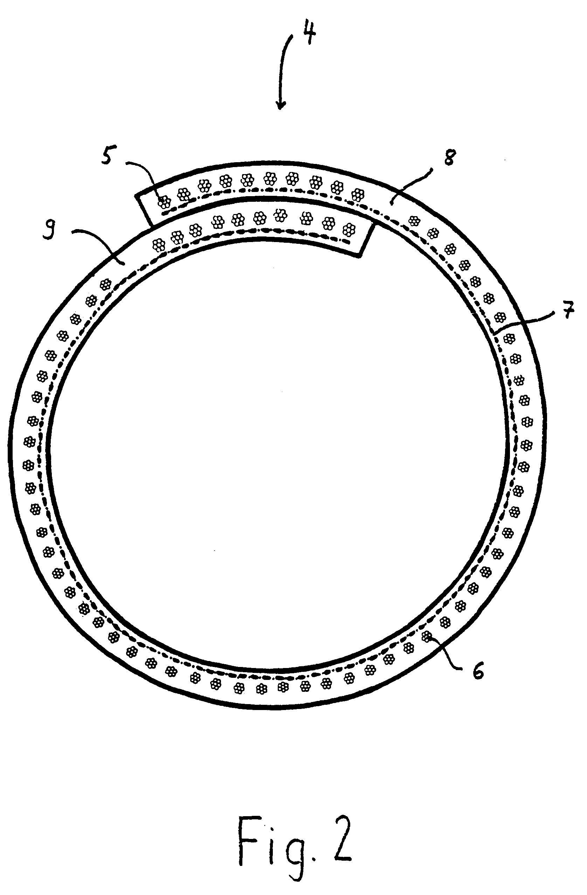

Fig. 2 zeigt einen Rohrfördergurt (4), dessen St-Seile (5, 6) gemäß Fig. 1 angeordnet sind. Dieser Gurt weist jedoch zusätzlich eine hochdehnfähige Synthesecord-Querarmierung (7) auf, u.z. als Innenquerarmierung (wegen der Lage zwischen Gurtinnenfläche und Zugträgern), die sich über die gesamte Gurtbreite erstreckt. Die Querarmierung führt zu einer Stabilisierung des Verbunds der St-Zugträgerseile. Außerdem schützt sie wirksam gegen Aufschlagbeschädigungen im Aufgabebereich. Um hier die Zwangsführung zur Überlappung im Randbereich zu erleichtern, weist der Gurt im Übergangsbereich A,B eine Sollknickstelle (8, 9) auf.

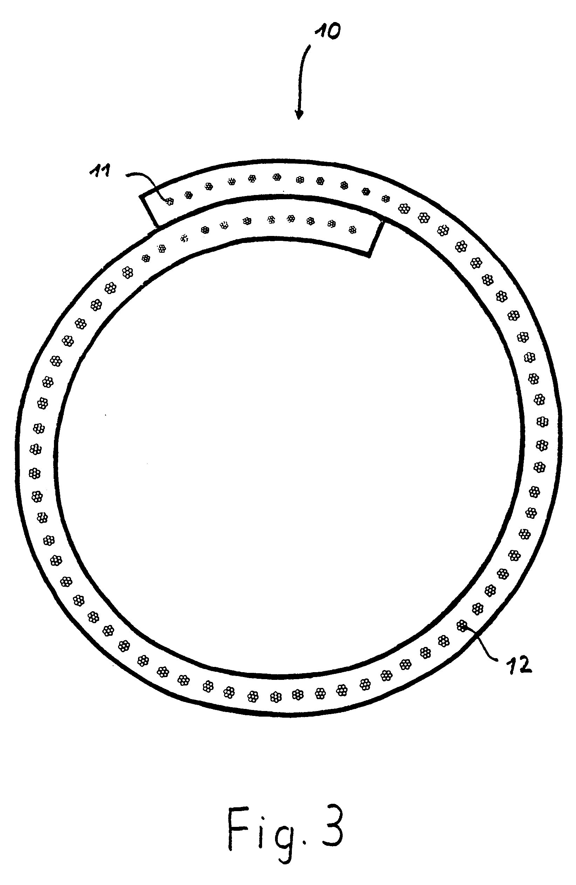

Nach Fig. 3 weist der Rohrfördergurt (10) St-Seile (11, 12) auf, die über die gesamte Gurtbreite hinweg in etwa den gleichen Abstand zueinander haben. Da der Durchmesser der St-Seile (12) innerhalb des B-Bereiches größer ist als der der St-Seile (11) im A-Bereich, liegt hier der Schwerpunkt der Zugkraft im B-Bereich.

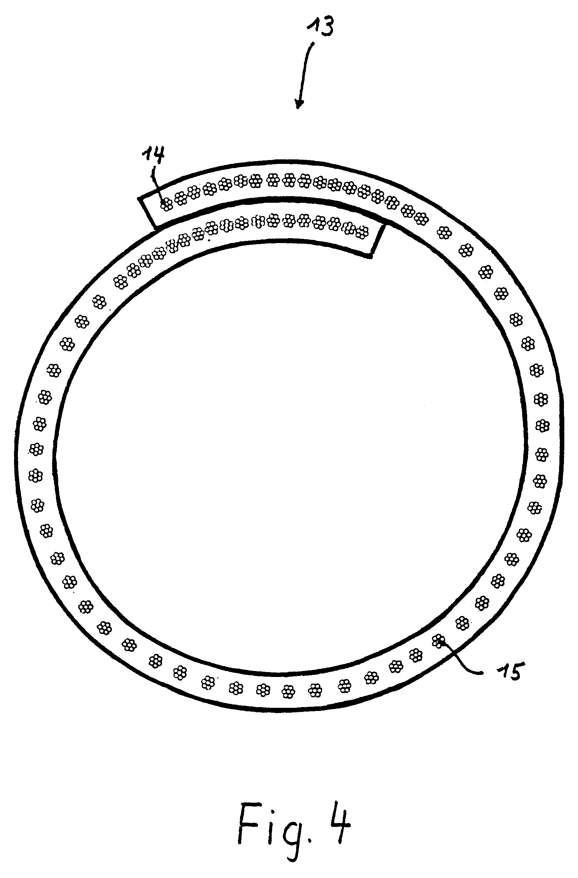

Fig. 4 zeigt einen Rohrfördergurt (13), dessen St-Seile (14, 15) über die gesamte Gurtbreite hinweg in etwa den gleichen Seildurchmesser haben. Da jedoch der Abstand der St-Seile (14) zueinander innerhalb des A-Bereiches geringer ist als der der St-Seile (15) innerhalb des B-Bereiches, liegt hier der Schwerpunkt der Zugkraft im Überlappungsbereich.

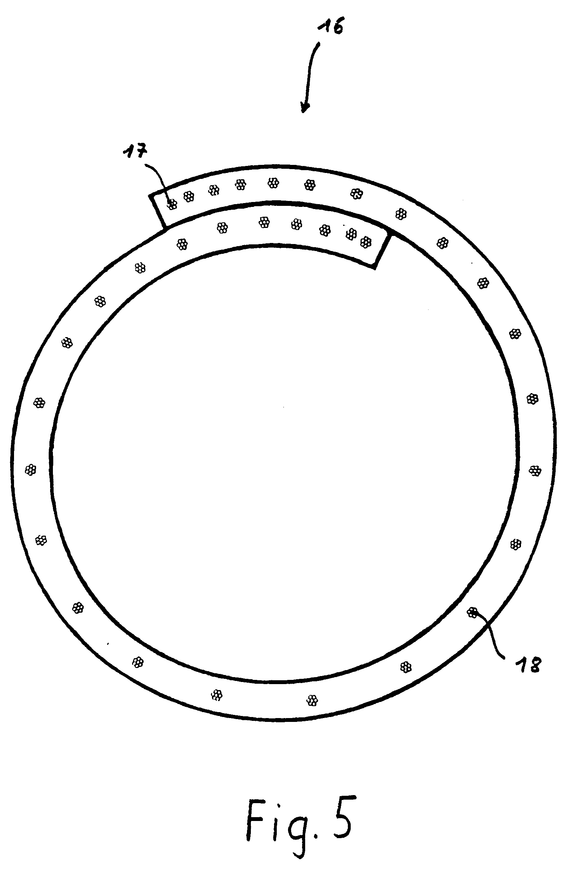

Nach Fig. 5 weist der Rohrfördergurt (16) St-Seile (17, 18) auf, die über die gesamte Gurtbreite hinweg in etwa den gleichen Seildurchmesser haben. Die St-Seile (17) innerhalb des A-Bereiches haben jedoch einen geringeren Abstand zueinander als die St-Seile (18) innerhalb des B-Bereiches, wobei die Abstandsänderung allmählich erfolgt. Der Schwerpunkt der Zugkraftwirkung liegt hier im Überlappungsbereich.

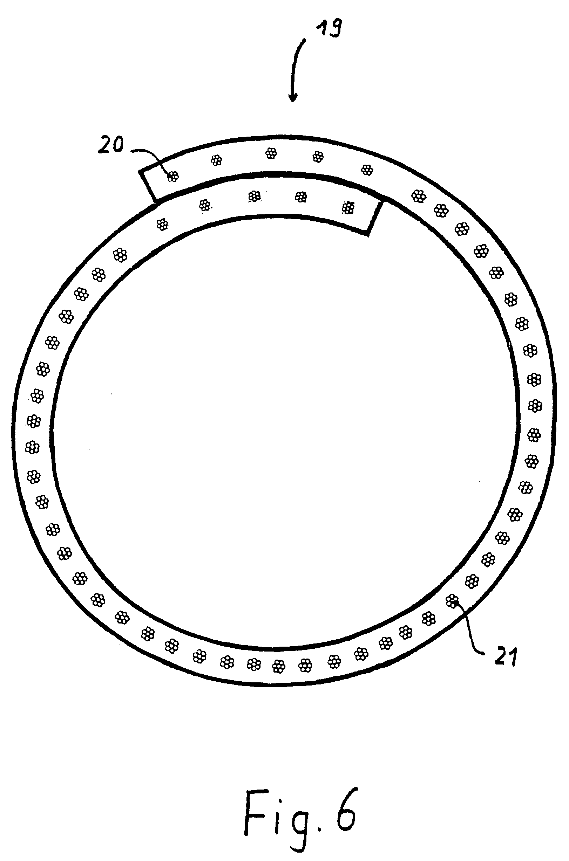

Fig. 6 zeigt einen Rohrfördergurt (19), dessen St-Seile (20) innerhalb des A-Bereiches einen kleineren Durchmesser sowie einen größeren Abstand zueinander aufweisen als dessen St-Seile (21) innerhalb des B-Bereiches. Der Schwerpunkt der Zugkraftwirkung liegt hier im B-Bereich.

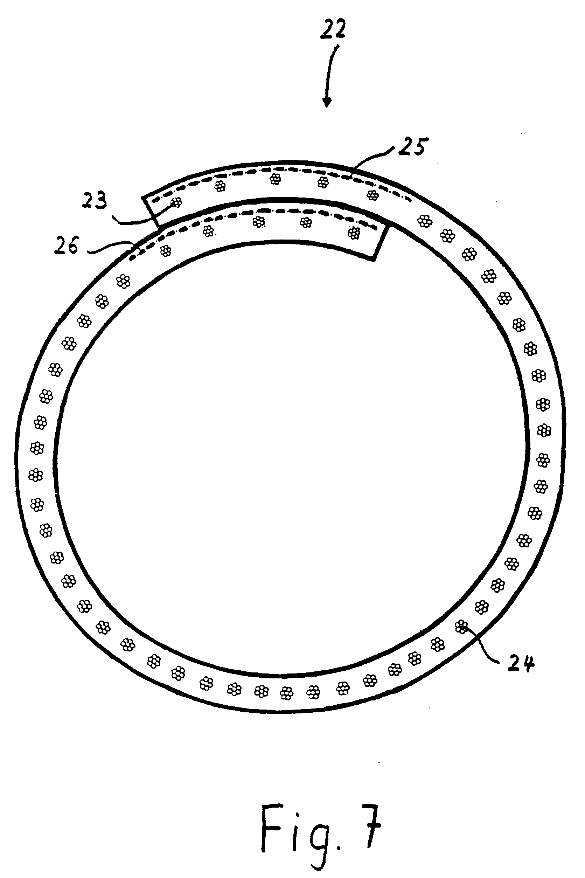

Fig. 7 zeigt einen Rohrfördergurt (22), dessen St-Seile (23, 24) gemäß Fig. 6 angeordnet sind. Dieser Gurt weist jedoch innerhalb des A-Bereiches eine Außenquerarmierung (25, 26) aus hochdehnfähigem Synthesecord auf. Die Armierung im Randbereich erhöht die Verschleißfestigkeit im hochbeanspruchten Randbereich.

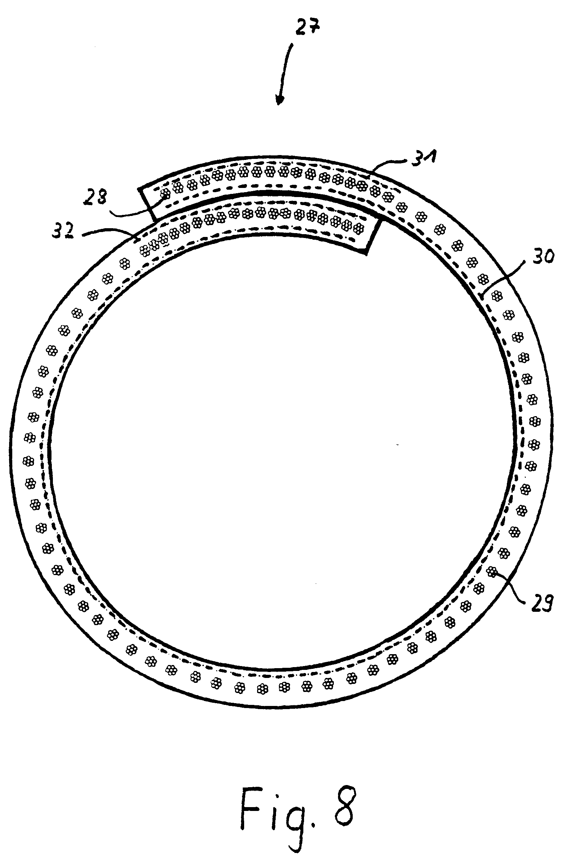

Fig. 8 zeigt einen Rohrfördergurt (27), dessen St-Seile (28, 29) gemäß Fig. 4 angeordnet sind. Der Gurt weist hier jedoch zusätzlich eine Innenquerarmierung (30), die sich über die gesamte Gurtbreite erstreckt, sowie eine Außenquerarmierung (31, 32) auf, die sich lediglich innerhalb des Überlappungsbereiches befindet.

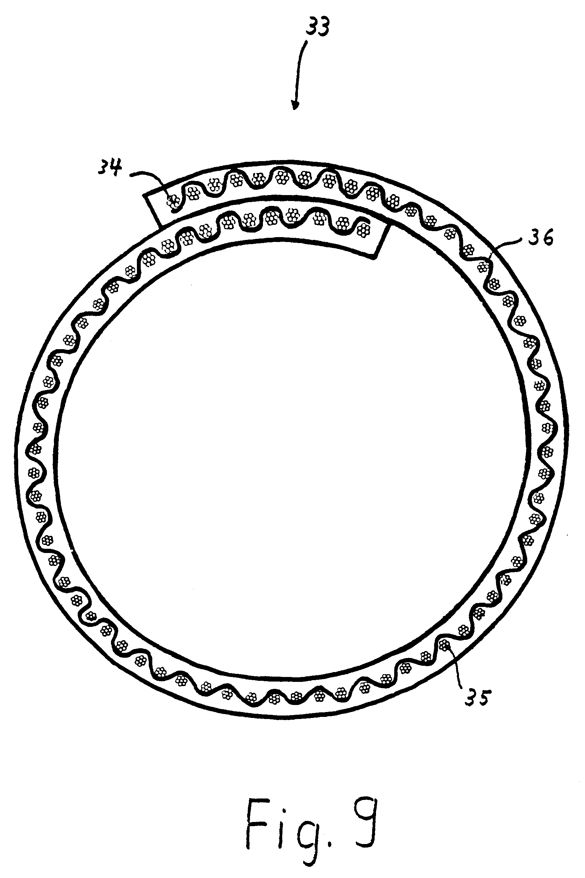

Nach Fig. 9 weist der Rohrfördergurt (33) neben den St-Seilen (34, 35) noch einen hochflexiblen Stahlschuß (36) auf. St-Zugträger und St-Schuß bilden hier ein sog. St-Geflecht.

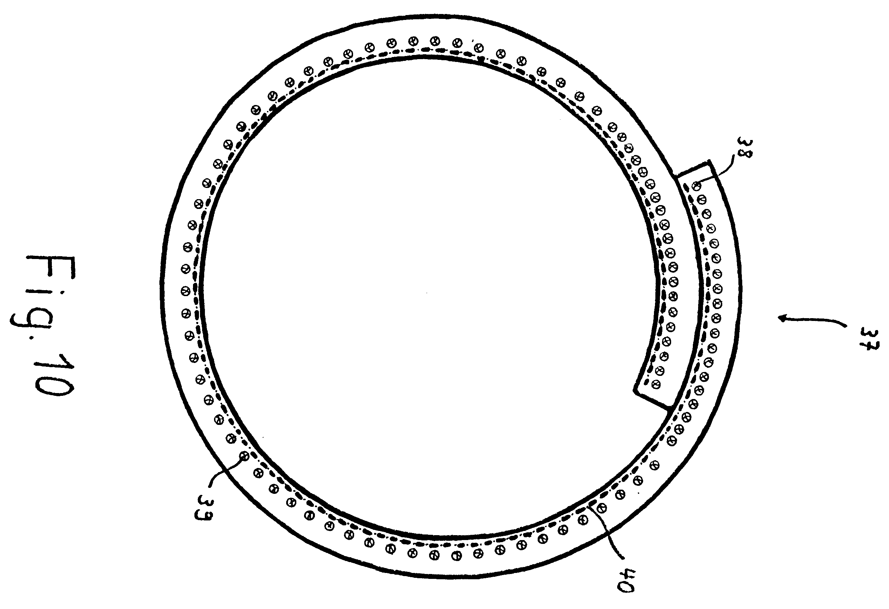

Nach Fig. 10 weist der Rohrfördergurt (37) Aramid-Seile (38, 39) auf, die über die gesamte Gurtbreite hinweg in etwa den gleichen Durchmesser haben. Da jedoch der Abstand der D-Seile (38) zueinander innerhalb des A-Bereiches geringer ist als der der D-Seile (39) innerhalb des B-Bereiches, liegt hier der Schwerpunkt der Zugkraft im Überlappungsbereich. Der Gurt besitzt hier eine Innenquerarmierung (40), die sich über die gesamte Gurtbreite erstreckt.

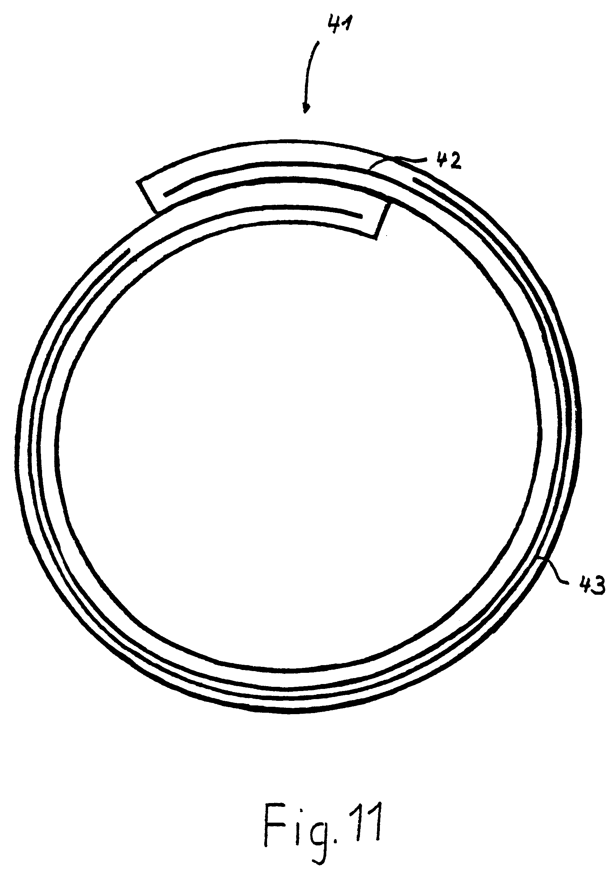

Fig. 11 zeigt einen Rohrfördergurt (41), der im A-Bereich 1-lagig (Gewebelage 42) und im B-Bereich 2-lagig (Gewebelagen 42, 43) ausgebildet ist. Der Schwerpunkt der Zugkraft liegt hier im B-Bereich des Gurtes.

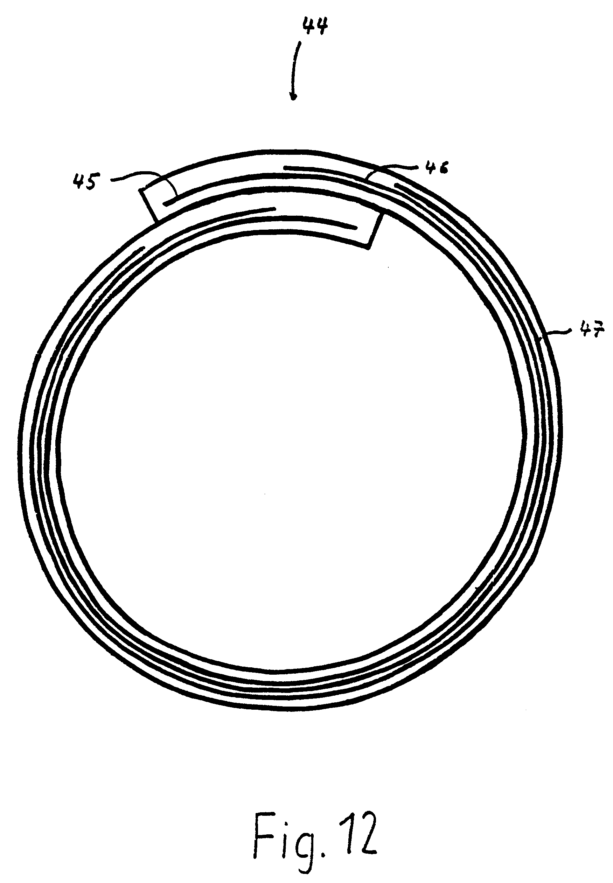

Fig. 12 zeigt einen Rohrfördergurt (44), der innerhalb des A-Bereiches stufenweise 1- und 2-lagig (Gewebelagen (45, 46) sowie im B-Bereich 3-lagig (Gewebelagen (45, 46, 47) ausgebildet ist.

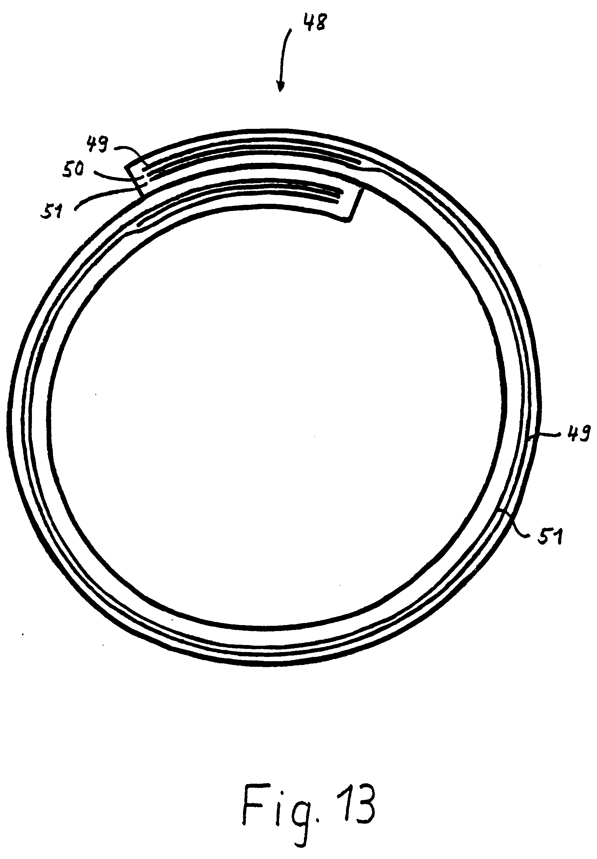

Fig. 13 zeigt einen Rohrfördergurt (48), der innerhalb des A-Bereiches 3-lagig (Gewebelagen 49, 50, 51) sowie im B-Bereich 2-lagig (Gewebelagen (49, 51) ausgebildet ist. Der Schwerpunkt der Zugkraftwirkung liegt hier im Überlappungsbereich.

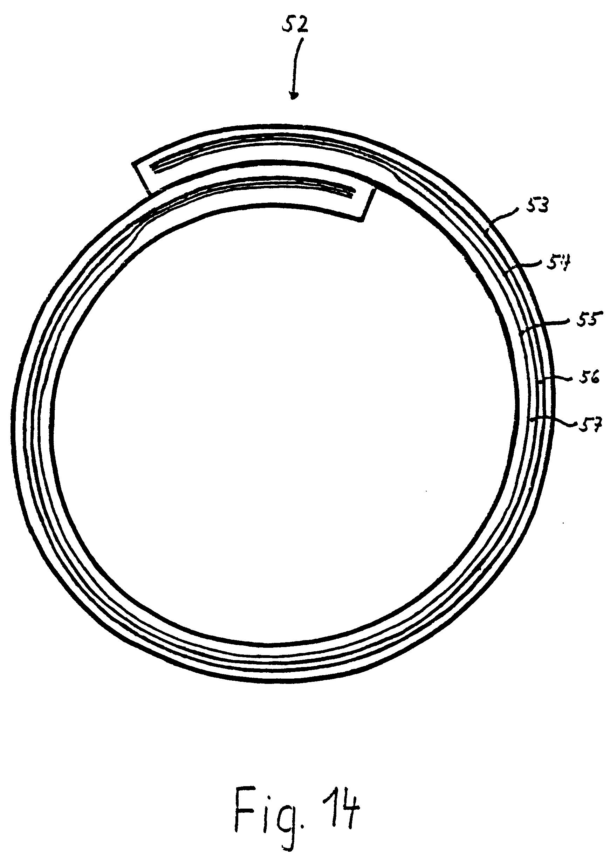

Fig. 14 zeigt einen Rohrfördergurt (52), der sowohl im A-als auch im B-Bereich 3-lagig (Gewebelagen 53, 54, 55) ausgebildet ist, wobei zwischen den Gewebelagen innerhalb des B-Bereiches Zwischengummierungen (56, 57) angeordnet sind. Zwischen den Gewebelagen innerhalb des A-Bereiches kann ggf. auch eine Zwischengummischicht angeordnet sein, die jedoch eine geringere Stärke aufweist als die im B-Bereich.

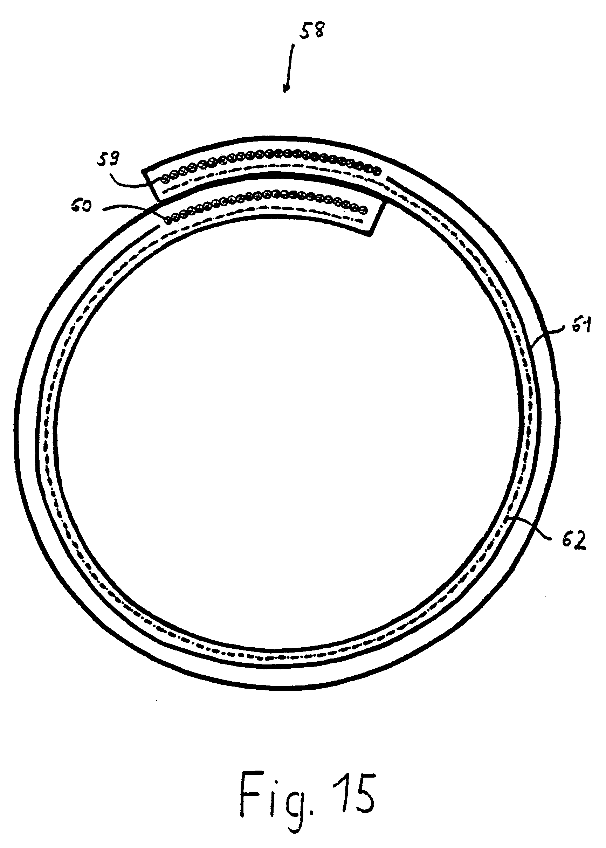

Nach Fig. 15 weist der Rohrfördergurt (58) innerhalb des A-Bereiches Aramid-Seile (59, 60) und im B-Bereich eine Gewebeeinlage (61) auf. Zusätzlich erstreckt sich über die gesamte Fördergurtbreite eine Innenquerarmierung (62).

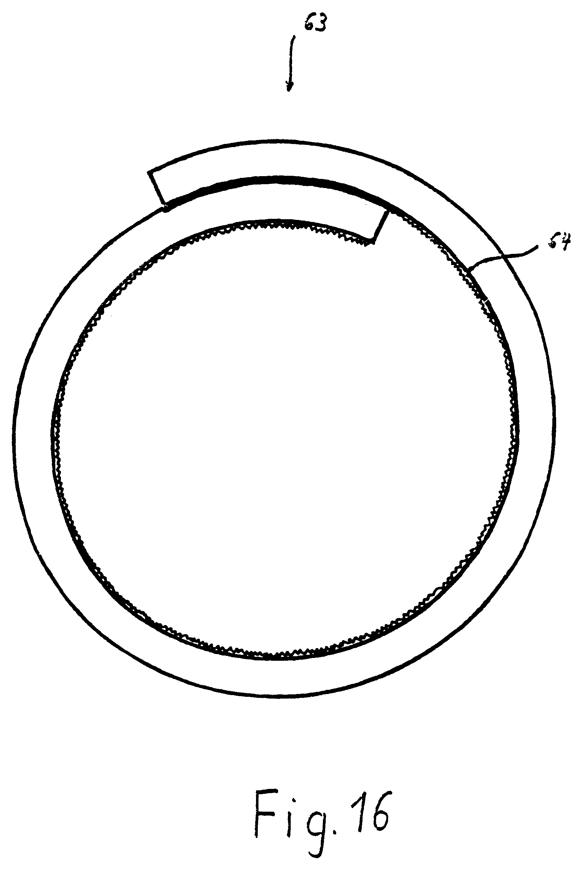

Fig. 16 zeigt einen Rohrfördergurt (63), der eine profilierte Innenoberfläche (64) aufweist. Durch diese Maßnahme wird erreicht, daß bei der Auf- oder Abwärtsförderung das Fördergut nicht zu leicht ins Rutschen kommt.

## Patentansprüche

1. Fördergurt aus Gummi oder gummiähnlichem Kunststoff mit in Längsrichtung verlaufenden eingebetteten Zugträgern, die sich im wesentlichen über die gesamte Fördergurtbreite erstrecken und die im Bereich der Längsränder (A-Bereich) einen anderen Aufbau aufweisen als im Restgurtbereich (B-Bereich), wobei der Gurt durch Überlappung seiner Längsränder (A-Bereich) zu einem Rohrfördergurt schließbar ist, der sich ringsum an Tragrollen abstützt, wobei die Zugträger ausschließlich aus Seilen oder Einzlcorden bestehen (Variante I), u.z. nach einer der folgenden Aufbau-Varianten:
(Ia) Die Zugträger (2, 5, 34) im A-Bereich haben einen größeren Durchmesser als die Zugträger (3, 6, 35) im B-Bereich, wobei die Zugträger überall den gleichen Abstand zueinander haben.
(Ib) Die Zugträger (11) im A-Bereich haben einen kleineren Durchmesser als die Zugträger (12) im B-Bereich, wobei die Zugträger überall den gleichen Abstand zueinander haben.
(Ic) Die Zugträger (14, 17, 28, 38) im A-Bereich haben einen kleineren Abstand zueinander als die Zugträger (15, 18, 29, 39) im B-Bereich, wobei die Zugträger überall den gleichen Durchmesser aufweisen.
(Id) Die Zugträger im A-Bereich haben einen größeren Abstand zueinander als die im B-Bereich, wobei die Zugträger überall den gleichen Durchmesser aufweisen.
(Ie) Die Zugträger im A-Bereich haben einen kleineren Abstand zueinander und einen kleineren Durchmesser als die im B-Bereich.
(If) Die Zugträger im A-Bereich haben einen kleineren Abstand zueinander und einen größeren Druchmesser als die im B-Bereich.
(Ig) Die Zugträger im A-Bereich haben einen größeren Abstand zueinander und einen größeren Durchmesser als die im B-Bereich.
(Ih) Die Zugträger (20, 23) im A-Bereich haben einen größeren Abstand zueinander und einen kleineren Durchmesser als die Zugträger (21, 24) im B-Bereich.

2. Fördergurt aus Gummi oder gummiähnlichem Kunststoff mit in Längsrichtung verlaufenden eingebetteten Zugträgern, die sich im wesentlichen über die gesamte Fördergurtbreite erstrecken und die im Bereich der Längsränder (A-Bereich) einen anderen Aufbau aufweisen als im Restgurtbereich (B-Bereich), wobei der Gurt durch Überlappung seiner Längsränder (A-Bereich) zu einem Rohrfördergurt schließbar ist, der sich ringsum an Tragrollen abstützt, wobei die Zugträger ausschließlich aus Kettfäden bestehen, die mit hochdehnfähigen Schußfäden ein Gewebe bilden (Variante II), u.z. nach einer der folgenden Aufbau-Varianten:
(IIa) Bei überall gleicher Einlagenanzahl eines n-Lagen-Gurtes (n ≧ 2) befindet sich im A-Bereich zwischen den Gewebeeinlagen keine Zwischengummischicht, während im B-Bereich zwischen den Gewebeeinlagen eine Zwischengummischicht vorhanden ist.
(IIb) Bei überall gleicher Einlagenanzahl eines n-Lagen-Gurtes (n ≧ 2) befindet sich sowohl im A- als auch im B-Bereich zwischen den Gewebeeinlagen eine Zwischengummischicht, wobei die Zwischengummischicht im A-Bereich eine geringere Stärke aufweist als die im B-Bereich.
(IIc) Der Gurt ist im A-Bereich 1-lagig (Gewebelage 42) und im B-Bereich 2-lagig (Gewebelagen 42, 43) ausgebildet.
(IId) Der Gurt ist im A-Bereich stufenweise 1- und 2-lagig (Gewebelagen 45, 46) sowie im B-Bereich 3-lagig (Gewebelagen 45, 46, 47) ausgebildet.
(IIe) Der Gurt ist im A-Bereich 3-lagig (Gewebelagen 49, 50, 51) und im B-Bereich 2-lagig (Gewebelagen 49, 51) ausgebildet.

3. Fördergurt aus Gummi oder gummiähnlichem Kunststoff mit in Längsrichtung verlaufenden eingebetteten Zugträgern, die sich im wesentlichen über die gesamte Fördergurtbreite erstrecken und die im Bereich der Längsränder (A-Bereich) einen anderen Aufbau aufweisen als im Restgurtbereich (B-Bereich), wobei der Gurt durch Überlappung seiner Längsränder (A-Bereich) zu einem Rohrfördergurt schließbar ist, der sich ringsum an Tragrollen abstützt, wobei die Zugträger im A-Bereich aus Aramid-Seilen oder Aramid-Einzelcorden bestehen, während die Zugträger im B-Bereich ausschließlich Kettfäden sind, die mit hochdehnfähigen Schußfäden ein Gewebe bilden (Variante III).

4. Fördergurt nach Anspruch 1, dadurch gekennzeichnet, daß gemäß Variante (I) die Zugträger aus Stahl (insbesondere Edelstahl), Polyester, Polyamid, Kohlenstoff und/oder Aramid bestehen.

5. Fördergurt nach Anspruch 1 oder 4, dadurch gekennzeichnet, daß die Änderung des Abstandes bzw. des Durchmessers der Zugträger übergangslos oder allmählich erfolgt.

6. Fördergurt nach Anspruch 1, 4 oder 5, dadurch gekennzeichnet, daß gemäß der Varianten (Ic bis Ih) der Abstand der Zugträger im A-Bereich 10 bis 100 mm (insbesondere 10 bis 50 mm) und im B-Bereich 1 bis 10 mm (insbesondere 5 bis 8 mm) bzw. umgekehrt beträgt.

7. Fördergurt nach einem der Ansprüche 1, 4 bis 6, dadurch gekennzeichnet, daß gemäß Variante (I) die Zugträger (34, 35) aus Stahl einen hochflexiblen Stahl- und/oder Polyamidschuß (36) aufweisen.

8. Fördergurt nach einem der Ansprüche 1 bis 7, dadurch gekennzeichnet, daß zusätzlich zu den Zugträgern eine hochdehnfähige Synthesecord-Querarmierung vorhanden ist, die sich über die gesamte Gurtbreite und/oder nur über den A- bzw. B-Bereich erstreckt.

9. Fördergurt nach Anspruch 8, dadurch gekennzeichnet, daß sich zwischen den Zugträgern der Varianten (I, III) und der Gurtinnenfläche eine Querarmierung (7, 40, 62) befindet, die sich über die gesamte Fördergurtbreite erstreckt.

10. Fördergurt nach Anspruch 8, dadurch gekennzeichnet, daß sich zwischen den Zugträgern der Varianten (I, II, III) und der Gurtinnenfläche eine Querarmierung befindet, die sich nur über den B-Bereich erstreckt.

11. Fördergurt nach Anspruch 8, dadurch gekennzeichnet, daß sich zwischen den Zugträgern der Varianten (I, III) und der Gurtaußenfläche eine Querarmierung (25, 26) befindet, die sich nur im A-Bereich befindet.

12. Fördergurt nach Anspruch 8, dadurch gekennzeichnet, daß sich zwischen den Zugträgern der Varianten (I, III) und der Gurtinnen- sowie der Gurtaußenfläche eine Querarmierung befindet, wobei sich die Innenquerarmierung (30) über die gesamte Gurtbreite erstreckt, während die Außenquerarmierung (31, 32) nur im A-Bereich vorhanden ist.

13. Fördergurt nach einem der Ansprüche 1, 4 bis 12, dadurch gekennzeichnet, daß gemäß Variante (I) die Zugträger innerhalb des A-Bereiches eine höhere spezifische Festigkeit aufweisen als die im B-Bereich.

14. Fördergurt nach einem der Ansprüche 2, 8 oder 10, dadurch gekennzeichnet, daß sich der Gurt gemäß Variante (II) (insbesondere gemäß Varianten IIc, d) innerhalb des A-Bereiches verdünnt.

15. Fördergurt nach einem der Ansprüche 1 bis 14, dadurch gekennzeichnet, daß dieser, insbesondere in Verbindung mit Zugträgern der Variante (I), eine Sollknickstelle (8, 9) aufweist, die sich insbesondere im Übergangsbereich A, B befindet.

16. Fördergurt nach einem der Ansprüche 1 bis 15, dadurch gekennzeichnet, daß dieser eine profilierte Innenoberfläche (64) aufweist.

## Claims

1. A conveyor belt of rubber or rubberlike plastics with embedded
traction bearers running in the longitudinal direction, which extend essentially across the whole width of the conveyor belt and exhibit in the region of the longitudinal edges (Region A) another construction than in the remaining region of the belt (Region B), whilst by overlapping its longitudinal edges (Region A) the belt may be closed into a tubular conveyor belt which bears all round on carrier rollers, and the traction bearers consist exclusively of ropes or single cords (Variant I), i.e., according to one of the following variants upon the construction:
(Ia) The traction bearers (2, 5, 34) in Region A have a larger diameter than the traction bearers (3, 6, 35) in Region B, though the traction bearers have everywhere the same pitch;
(Ib) The traction bearers (11) in Region A have a smaller diameter than the traction bearers (12) in Region B, though the traction bearers have everywhere the same pitch;
(Ic) The traction bearers (14, 17, 28, 38) in Region A have a closer pitch than the traction bearers (15, 18, 29, 39) in Region B, though the traction bearers exhibit everywhere the same diameter;
(Id) The traction bearers in Region A have a wider pitch than those in Region B, though the traction bearers exhibit everywhere the same diameter;
(Ie) The traction bearers in Region A have a closer pitch and a smaller diameter than those in Region B;
(If) The traction bearers in Region A have a closer pitch and a larger diameter than those in Region B;
(Ig) The traction bearers in Region A have a wider pitch and a larger diameter than those in Region B;
(Ih) The traction bearers (20, 23) in Region A have a wider pitch and a smaller diameter than the traction bearers (21, 24) in Region B.

2. A conveyor belt of rubber or rubberlike plastics with embedded
traction bearers running in the longitudinal direction, which extend essentially across the whole width of the conveyor belt and exhibit in the region of the longitudinal edges (Region A) another construction than in the remaining region of the belt (Region B), whilst by overlapping its longitudinal edges (Region A) the belt may be closed into a tubular conveyor belt which bears all round on carrier rollers, and the traction bearers consist exclusively of warp threads which form a weave with highly extensible weft threads (Variant II), i.e., according to one of the following variants upon the construction:
(IIa) In the case of the same number of plies everywhere in a belt of n plies (n ≧ 2) there is no intermediate rubber layer between the plies in Region A, whilst in Region B there is an intermediate rubber layer between the plies;
(IIb) In the case of the same number of plies everywhere in a belt of n plies (n ≧ 2) there is an intermediate rubber layer between the plies both in Region A and Region B, the intermediate rubber layer in Region A exhibiting a thickness less than that in Region B;
(IIc) The belt is made singleply (ply 42) in Region A and 2-ply (plies 42, 43) in Region B;
(IId) The belt is made singleply and 2-ply in steps (plies 45, 46) in Region A and 3-ply (plies 45, 46, 47) in Region B;
(IIe) The belt is made 3-ply (plies 49, 50, 51) in Region A and 2-ply (plies (49, 51) in Region B.

3. A conveyor belt of rubber or rubberlike plastics with embedded
traction bearers running in the longitudinal direction, which extend essentially across the whole width of the conveyor belt and exhibit in the region of the longitudinal edges (Region A) another construction than in the remaining region of the belt (Region B), whilst by overlapping its longitudinal edges (Region A) the belt may be closed into a tubular conveyor belt which bears all round on carrier rollers, and the traction bearers consist of aramide ropes or single aramide cords in Region A, whilst the traction bearers in Region B are exclusively warp threads which form a weave with highly extensible weft threads (Variant III).

4. A conveyor belt as in Claim 1, characterized in that
in accordance with Variant (I) the traction bearers consist of steel (in particular stainless steel), polyester, polyamide, carbon and/or aramide.

5. A conveyor belt as in Claim 1 or 4, characterized in that
the alteration of the pitch or diameter of the traction bearers is effected without transition or gradually.

6. A conveyor belt as in Claim 1, 4 or 5, characterized in that
in accordance with Variants (Ic to Ih) the pitch of the traction bearers in Region A amounts to 10 to 100 mm (in particular 10 to 50 mm) and in Region B to 1 to 10 mm (in particular 5 to 8 mm) or vice versa.

7. A conveyor belt as in one of the Claims 1 and 4 to 6,
characterized in that in accordance with Variant (I) the traction bearers (34, 35) of steel exhibit a highly flexible steel and/or polyamide weft (36).

8. A conveyor belt as in one of the Claims 1 to 7,
characterized in that in addition to the traction bearers there is a highly extensible synthetic cord cross-armouring which extends across the whole width of the belt and/or only across the regions A or B.

9. A conveyor belt as in Claim 8, characterized in that
between the traction bearers of Variants (I, III) and the inner face of the belt there is a cross-armouring (7, 40, 62) which extends across the whole width of the conveyor belt.

10. A conveyor belt as in Claim 8, characterized in that
between the traction bearers of Variants (I, II, III) and the inner face of the belt there is a cross-armouring which only extends across Region B.

11. A conveyor belt as in Claim 8, characterized in that
between the traction bearers of Variants (I, III) and the outer face of the belt there is a cross-armouring (25, 26) which lies only in Region A.

12. A conveyor belt as in Claim 8, characterized in that
between the traction bearers of Variants (I, III) and the inner face as well as the outer face of the belt there is cross-armouring, the inner cross-armouring (30) extending across the whole width of the belt whilst the outer cross-armouring (31, 32) is present only in Region A.

13. A conveyor belt as in one of the Claims 1 and 4 to 12,
characterized in that in accordance with Variant (I) the traction bearers within Region A exhibit a higher specific strength than those in Region B.

14. A conveyor belt as in one of the Claims 2, 8 or 10,
characterized in that the belt in accordance with Variant (II) (in particular in accordance with Variants IIc, d) is made thinner within Region A.

15. A conveyor belt as in one of the Claims 1 to 14,
characterized in that especially in combination with traction bearers of Variant (I) it exhibits a desired point of bend (8, 9) which lies in particular in the region of transition from A to B.

16. A conveyor belt as in one of the Claims 1 to 15,
characterized in that it exhibits a profiled inner surface (64).

## Revendications

1. Courroie de convoyeur en caoutchouc ou en matière plastique caoutchouteuse, comportant des renforts de traction incorporés qui sont orientés en direction longitudinale, s'étalent pratiquement sur toute la largeur de la courroie de convoyeur et présentent, dans la région des bords longitudinaux (zone A), une structure différente de celle qu'ils ont dans la région restante de la courroie (zone B), la courroie pouvant être fermée, par superposition de ses bords longitudinaux (zone A), en une courroie tubulaire de convoyeur qui prend appui de tous côtés sur des rouleaux porteurs, les renforts de traction étant constitués exclusivement par des câbles ou des cordes individuelles (variante I), à savoir selon l'une des variantes de construction suivantes:
(Ia) Les renforts de traction (2, 5, 34) ont, dans la zone A, un plus grand diamètre que les renforts de traction (3, 6, 35) dans la zone B, les renforts de traction ayant partout le même espacement mutuel.
(Ib) Les renforts de traction (11) dans la zone A ont un plus petit diamètre que les renforts de traction (12) dans la zone B, les renforts de traction ayant partout le même espacement mutuel.
(Ic) Les renforts de traction (14, 17, 28, 38) dans la zone A ont un espacement mutuel plus petit que les renforts de traction (15, 18, 29, 39) dans la zone B, les renforts de traction présentant partout le même diamètre.
(Id) Les renforts de traction dans la zone A ont un espacement mutuel plus grand que ceux de la zone B, les renforts de traction présentant partout le même diamètre.
(Ie) Les renforts de traction dans la zone A ont un espacement mutuel plus petit et un diamètre plus petit que ceux de la zone B.
(If) Les renforts de traction dans la zone A ont un espacement mutuel plus petit et un diamètre plus grand que ceux de la zone B.
(Ig) Les renforts de traction dans la zone A ont un espacement mutuel plus grand et un diamètre plus grand que ceux de la zone B.
(Ih) Les renforts de traction (20, 23) dans la zone A ont un espacement mutuel plus grand et un diamètre plus petit que les renforts de traction (21, 24) dans la zone B.

2. Courroie de convoyeur en caoutchouc ou en matière plastique caoutchouteuse, comportant des renforts de traction incorporés qui sont orientés en direction longitudinale, s'étalent pratiquement sur toute la largeur de la courroie de convoyeur et présentent, dans la région des bords longitudinaux (zone A), une structure différente de celle qu'ils ont dans la région restante de la courroie (zone B), la courroie pouvant être fermée, par superposition de ses bords longitudinaux (zone A), en une courroie tubulaire de convoyeur qui prend appui de tous côtés sur des rouleaux porteurs, les renforts de traction étant constitués exclusivement par des fils de chaîne qui forment un tissu avec des fils de trame très extensibles (variante II), à savoir selon l'une des variantes de construction suivantes:
(IIa) Avec un nombre partout égal de plis de tissu dans une courroie à n plis (n ≧ 2), il n'est pas interposé, dans la zone A, de couche intermédiaire de caoutchouc entre les plis de tissu, tandis que dans la zone B, une couche intermédiaire de caoutchouc est présente entre les plis de tissu.
(IIb) Avec un nombre partout égal de plis de tissu dans une courroie à n plis (n ≧ 2), une couche intermédiaire de caoutchouc se trouve entre les plis de tissu, aussi bien dans la zone A que dans la zone B, la couche intermédiaire de caoutchouc dans la zone A présentant une plus petite épaisseur que celle de la zone B.
(IIc) La courroie est réalisée à 1 pli (couche de tissu 42) dans la zone A et à 2 plis (couches de tissu (42, 43) dans la zone B.
(IId) La courroie est réalisée à 1 et 2 plis en gradins (couches de tissu 45, 46) dans la zone A, et à 3 plis (couches de tissu 45, 46, 47) dans la zone B.
(IIe) La courroie est réalisée à 3 plis (couches de tissu 49, 50, 51) dans la zone A et à 2 plis (couches de tissu 49, 51) dans la zone B.

3. Courroie de convoyeur en caoutchouc ou en matière plastique caoutchouteuse, comportant des renforts de traction incorporés qui sont orientés en direction longitudinale, s'étalent pratiquement sur toute la largeur de la courroie de convoyeur et présentent, dans la région des bords longitudinaux (zone A), une structure différente de celle qu'ils ont dans la région restante de la courroie (zone B), la courroie pouvant être fermée, par superposition de ses bords longitudinaux (zone A), en une courroie tubulaire de convoyeur qui prend appui de tous côtés sur des rouleaux porteurs, les renforts de traction dans la zone A étant constitués par des câbles en aramide ou des cordes individuelles en aramide, tandis que les renforts de traction dans la zone B sont exclusivement des fils de chaîne qui forment un tissu avec des fils de trame très extensibles (variante III).

4. Courroie de convoyeur selon la revendication 1, caractérisée en ce que, dans la variante (I), les renforts de traction sont en acier (en particulier en acier spécial), en polyester, en polyamide, en carbone et/ou en aramide.

5. Courroie de convoyeur selon la revendication 1 ou 4, caractérisée en ce que le changement de l'espacement ou du diamètre des renforts de traction s'effectue sans transition brusque ou peu à peu.

6. Courroie de convoyeur selon l'une quelconque des revendications 1, 4 et 5, caractérisée en ce que, dans les variantes (Ic à Ih), l'espacement mutuel des renforts de traction est de 10 à 100 mm (en particulier de 10 à 50 mm) dans la zone A et de 1 à 10 mm (en particulier de 5 à 8 mm) dans la zone B, ou l'inverse.

7. Courroie de convoyeur selon l'une quelconque des revendications 1, 4 à 6, caractérisée en ce que, dans la variante (I), les renforts de traction (34, 35) en acier présentent une trame (36) en acier très flexible ou en polyamide.

8. Courroie de convoyeur selon l'une quelconque des revendications 1 à 7, caractérisée en ce qu'il est prévu, en plus des renforts de traction, une armature transversale en corde synthétique très extensible, qui s'étend sur toute la largeur de la courroie et/ou uniquement sur l'étendue de la zone A ou B.

9. Courroie de convoyeur selon la revendication 8, caractérisée en ce qu'il se trouve, entre les renforts de traction des variantes (I, III) et la surface intérieure de la courroie, une armature transversale (7, 40, 62) qui s'étend sur toute la largeur de la courroie de convoyeur.

10. Courroie de convoyeur selon la revendication 8, caractérisée en ce qu'il se trouve, entre les renforts de traction des variantes (I, II, III) et la surface intérieure de la courroie, une armature transversale qui ne s'étend que sur la zone B.

11. Courroie de convoyeur selon la revendication 8, caractérisée en ce qu'il se trouve, entre les renforts de traction des variantes (I, III) et la surface extérieure de la courroie, une armature transversale (25, 26) qui ne se trouve que dans la zone A.

12. Courroie de convoyeur selon la revendication 8, caractérisée en ce qu'une armature transversale se trouve entre les renforts de traction des variantes (I, III) et chacune des surfaces intérieure et extérieure de la courroie, l'armature transversale interne (30) s'étendant sur toute la largeur de la courroie, tandis que l'armature transversale externe (31, 32) n'est présente que dans la zone A.

13. Courroie de convoyeur selon l'une quelconque des revendications 1, 4 à 12, caractérisée en ce que, dans la variante (I), les renforts de traction dans la zone A présentent une résistance spécifique plus grande que ceux de la zone B.

14. Courroie de convoyeur selon l'une quelconque des revendications 2, 8 et 10, caractérisée en ce que la courroie dans la variante (II) (en particulier dans les variantes IIc, d) est amincie dans la zone A.

15. Courroie de convoyeur selon l'une quelconque des revendications 1 à 14, caractérisée en ce qu'elle présente, en particulier en liaison avec des renforts de traction de la variante (I), une zone (8, 9) destinée à la brisure, qui se trouve en particulier dans la région de transition entre les zones A et B.

16. Courroie de convoyeur selon l'une quelconque des revendications 1 à 15, caractérisée en ce qu'elle présente une surface intérieure profilée (64).
